# EUROPEAN PATENT APPLICATION

(11) **EP 4 729 488 A1**
(43) Date of publication of application: **22.04.2026**
(21) Application number: 24825803.0
(22) Date of filing: 13.06.2024
(51) Int. Cl.: C02F 1/44, C02F 3/12, C02F 3/34

(54) **WATER TREATMENT DEVICE**

(30) Priority: 19.06.2023 JP 2023099743
(71) Applicant: KUBOTA CORPORATION, Osaka-shi, Osaka 556-8601 (JP)
(72) Inventor: OKAJIMA Yasunobu, Amagasaki-shi, Hyogo 661-8567 (JP); ISHIHARA Yukako, Amagasaki-shi, Hyogo 661-8567 (JP); TANAKA Ken, Amagasaki-shi, Hyogo 661-8567 (JP); FUJINO Sota, Amagasaki-shi, Hyogo 661-8567 (JP)
(74) Representative: Müller-Boré & Partner Patentanwälte PartG mbB
(86) International application number: PCT/JP2024/021437
(87) International publication number: WO 2024/262398

(57) **Abstract**

Provided is a water treatment apparatus 1 including: a treatment tank 3 having a plurality of membrane separators 7 immersed therein and an auxiliary air diffuser 8 installed therein; an inflow path 5 configured to supply water to be treated from an anoxic tank 4 to the treatment tank 3; and a return path 6 configured to return the water to be treated from the treatment tank 3 to the anoxic tank 4. The membrane separators 7 are installed in a plurality of rows in the treatment tank 3. The auxiliary air diffuser 8 is installed between the rows of the membrane separators 7 so as to extend along each row. The inflow path 5 is installed between the rows of the membrane separators 7 so as to supply the water to be treated in a dispersed manner along each row.

## Description

### Technical Field

The present invention relates to a water treatment apparatus including: a treatment tank having a plurality of membrane separators immersed therein and an auxiliary air diffuser installed therein; an inflow path configured to supply water to be treated from an anoxic tank to the treatment tank; and a return path configured to return the water to be treated from the treatment tank to the anoxic tank.

### Background Art

To purify organic wastewater such as sewage, livestock wastewater, night soil, and wastewater generated from food processing plants, water treatment apparatuses employing a membrane bioreactor process have been of interest.

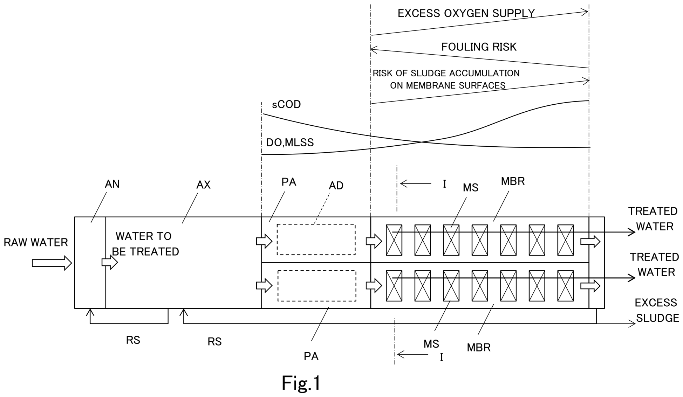

FIG. 1 illustrates an example configuration of a conventional water treatment apparatus employing a membrane bioreactor process. From the upstream side, an anaerobic tank AN, an anoxic tank AX, pre-aeration tanks PA, and membrane separation tanks MBR are arranged in this order. Organic wastewater, which is raw water, flows into the anaerobic tank AN and is mixed with activated sludge. This water to be treated is then purified as it flows downstream successively through the anaerobic tank AN, the anoxic tank AX, the pre-aeration tanks PA, and the membrane separation tanks MBR. The pre-aeration tank PA may function as an anoxic tank if necessary.

The water to be treated is subjected to phosphorus removal treatment in the anaerobic tank AN, denitrification treatment in the anoxic tank AX, nitrification (aerobic) treatment in the pre-aeration tanks PA, and both nitrification (aerobic) treatment and membrane separation treatment by membrane separators MS in the membrane separation tanks MBR. Sludge withdrawn from the membrane separation tank MBRs is returned to the anaerobic tank AN or the anoxic tank AX via a return path RS. Organic wastewater is purified as the water to be treated is circulated between the anaerobic tank AN and the membrane separation tanks MBR, and the water to be treated is withdrawn as treated water by the membrane separators MS.

Each membrane separation tank MBR is a treatment tank having a cuboid shape that is rectangular in plan view and elongated in one direction, in which multiple membrane separators MS are immersed in a single-row arrangement along the longitudinal direction of the treatment tank.

An air diffuser is provided below each membrane separator MS. Aerobic treatment of the water to be treated as well as cleaning of the membrane surfaces is performed with oxygen supplied from the air diffuser. Oxygen insufficient for aerobic treatment by the air diffuser is supplied from an auxiliary air diffuser installed in the pre-aeration tank PA located upstream of the membrane separation tank MBR.

In order to suppress fouling of the membrane separators MS, the dissolved oxygen (DO) concentration of the water to be treated flowing from the pre-aeration tank PA into the membrane separation tank MBR is often adjusted to 1 to 2 mg/L. Thus, aerobic treatment is nearly completed in the pre-aeration tank PA and the upstream region of the membrane separation tank MBR, leading to a situation where oxygen is excessively supplied in the downstream region of the membrane separation tank MBR. As a result, sludge with a high dissolved oxygen concentration is returned from the downstream side of the membrane separation tank MBR to the anaerobic tank AN or the anoxic tank AX, bringing unnecessary dissolved oxygen into the anaerobic tank AN or the anoxic tank AX.

That is, the upstream region of the membrane separation tank MBR, in which the aerobic treatment proceeds, has a high soluble COD (sCOD) concentration, exposing the membranes to an environment more susceptible to fouling than in the downstream region. This causes uneven fouling of the membranes in the flow direction of the water to be treated.

Furthermore, as treated water is withdrawn by the membrane separators MS, the MLSS concentration becomes higher toward the downstream side of the membrane separation tank MBR, increasing the risk of clogging between membranes. Thus, the amount of air diffused from the air diffusers provided below the respective membrane separators MS needs to be set higher toward the downstream side of the membrane separation tank MBR.

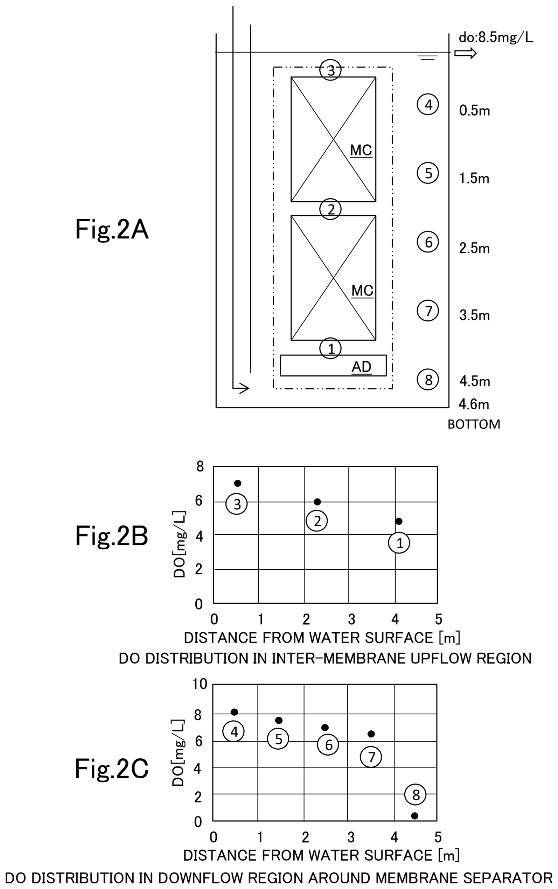

FIG. 2A illustrates an example cross-sectional structure of the membrane separation tank MBR having the membrane separators MS installed therein. Each membrane separator MS includes two vertical tiers of membrane cases MC and an air diffuser AD provided below the membrane cases MC. A circulating flow of the water to be treated is generated, in which an upflow generated in the water to be treated by air diffusion from the air diffuser AD cleans the membrane surfaces provided in the membrane cases MC and then flows down from above the membrane separator MS to both sides thereof. Thus, as shown in FIGS. 2B and 2C, the dissolved oxygen concentration of the water to be treated filled in the membrane separation tank MBR becomes higher near the water surface and lower near the bottom. For the convenience of calculating the transmembrane pressure, it is necessary to keep the water level constant. Therefore, overflow water from the membrane separation tank MBR has been stored in a terminal storage tank and returned as return sludge using a pump. This has been one of the factors causing sludge with a high dissolved oxygen (DO) concentration to be returned to the anaerobic tank AN or the anoxic tank AX.

Accordingly, Patent Literature 1 proposes an activated sludge treatment apparatus intended to achieve a uniform MLSS concentration and water quality within a separation tank. The apparatus includes: a separation tank for containing water to be treated and separating treated water from the water to be treated; a plurality of separation membranes immersed in the water to be treated within the separation tank and arranged at intervals along a longitudinal direction of the separation tank; treated water withdrawing means for withdrawing treated water through the plurality of separation membranes; and circulation means for circulating the water to be treated from a downstream portion of the separation tank in the longitudinal direction thereof to an upstream portion of the separation tank in the longitudinal direction thereof.

Patent Literature 1 also proposes providing, in the activated sludge treatment apparatus, inflow means for supplying the water to be treated into the separation tank, where the inflow means extends above the separation membranes along the longitudinal direction of the separation tank and includes a plurality of inlets along the longitudinal direction, thereby enabling uniform inflow of the water to be treated.

### Citation List

### Patent Literature

Patent Literature 1: Japanese Unexamined Patent Application Publication No. 2017-012994

### Summary of Invention

### Technical Problem

However, the activated sludge treatment apparatus disclosed in Patent Literature 1 is configured such that the plurality of separation membranes are installed in a single row along the longitudinal direction of the separation tank to cause the water to be treated to flow downstream along the longitudinal direction of the separation tank. Therefore, even with the provision of the circulation means, there is still a difference in MLSS concentration and dissolved oxygen concentration between the upstream side and the downstream side of the separation tank, and additional power is also required for the circulation means.

Additionally, to ensure uniform inflow of the water to be treated through the inflow means, the apparatus disclosed in Patent Literature 1 requires complicated control of adjusting the inflow amount of the water to be treated from the multiple inlets according to indicators such as the MLSS concentration distribution along the longitudinal direction of the separation tank.

In view of the above problems, it is an object of the present invention to provide a water treatment apparatus that can be installed in a compact space and enables uniform membrane separation treatment.

### Solution to Problem

To achieve the above object, a water treatment apparatus is provided according to the present invention. As a first feature of the apparatus, the apparatus includes: a treatment tank having a plurality of membrane separators immersed therein and an auxiliary air diffuser installed therein; an inflow path configured to supply water to be treated from an anoxic tank to the treatment tank; and a return path configured to return the water to be treated from the treatment tank to the anoxic tank, wherein the membrane separators are installed in a plurality of rows in the treatment tank, the auxiliary air diffuser is installed between the rows of the membrane separators so as to extend along each row of the membrane separators, and the inflow path is installed between the rows of the membrane separators so as to supply the water to be treated in a dispersed manner along each row of the membrane separators.

Arranging multiple membrane separators in multiple rows in the treatment tank eliminates the need for using a cuboid treatment tank elongated in one direction, making it possible to achieve a compact treatment tank. Further, the auxiliary air diffuser is installed between the rows of the membrane separators so as to extend along each row, and the inflow path is installed between the rows of the membrane separators so as to supply the water to be treated in a dispersed manner along each row. This arrangement ensures uniform aerobic treatment between the rows of the membrane separators by oxygen supplied from the auxiliary air diffuser to the water to be treated, which is supplied in a dispersed manner throughout the entire treatment tank. Also, the water to be treated is subjected to solid-liquid separation by the nearby membrane separator and withdrawn as treated water. That is, aerobic treatment is performed in a dispersed and uniform manner in the treatment tank. This can suppress the influence on the membrane separators caused by gradient distributions of the dissolved oxygen concentration and MLSS concentration along the flow direction of the water to be treated, which would otherwise occur if a cuboid treatment tank elongated in one direction is used.

In addition to the first feature above, the apparatus has a second feature that the auxiliary air diffuser is installed between the membrane separators and a sidewall of the treatment tank so as to extend along each row of the membrane separators, and the inflow path is installed between the membrane separators and a sidewall of the treatment tank so as to supply the water to be treated in a dispersed manner along each row of the membrane separators.

This configuration allows aerobic treatment to be performed uniformly not only between the rows of the membrane separators but also between the membrane separators and a sidewall of the treatment tank, ensuring more uniform aerobic treatment throughout the entire treatment tank.

In addition to the first feature above, the apparatus has a third feature that the auxiliary air diffuser is installed at a bottom of the treatment tank, and the inflow path is installed between the rows of the membrane separators in a vicinity of a water surface of the treatment tank so as to extend along each row of the membrane separators.

As bubbles diffused from the auxiliary air diffuser installed at the bottom of the treatment tank between the rows of the membrane separators rise, the water to be treated, which is supplied to a vicinity of the water surface of the treatment tank from the inflow path extending between the rows of the membrane separators, is subjected to efficient aerobic treatment.

In addition to the third feature above, the apparatus has a fourth feature that a circulating flow of the water to be treated is generated, in which an upflow of the water to be treated is generated by air diffusion from an air diffuser provided below the membrane separators and turns into a downflow flowing downward between the rows of the membrane separators from above the membrane separators, and the water to be treated introduced from the inflow path flows down toward the auxiliary air diffuser along the downflow.

In each of the membrane separators arranged in multiple rows in the treatment tank, the water to be treated is subjected to solid-liquid separation and withdrawn as treated water, and the membrane surfaces of separation membranes are cleaned by the upflow of the water to be treated generated by air diffusion from the air diffuser provided below the separation membranes. Thereafter, the upflow turns into a downflow and flows down between the rows of the membrane separators from above the membrane separators. That is, a circulating flow is generated, in which the water to be treated rises inside the membrane separators and flows down between the rows on both sides of the membrane separators. The water to be treated introduced from the inflow path flows down toward the auxiliary air diffuser along the downflow generated between the rows, allowing aerobic treatment to proceed efficiently.

In addition to the third or fourth feature above, the apparatus has a fifth feature that the inflow path is constituted by a pipe formed with openings configured to allow the water to be treated to be supplied in a dispersed manner along an extending direction of the inflow path.

The inflow path is constituted by a pipe disposed so as to extend between the rows of the membrane separators, and the water to be treated is supplied in a dispersed manner along the axial direction of the pipe through the openings formed therein. The openings may be implemented by, for example, a plurality of small holes formed in the pipe along the axial direction thereof or by slits formed in the pipe along the axial direction thereof.

In addition to the third or fourth feature above, the apparatus has a sixth feature that the inflow path is constituted by a plurality of pipes arranged such that open ends thereof are distributed along an extending direction of the inflow path.

The inflow path is formed by a plurality of pipes each configured to allow the water to be treated to flow in from one open end thereof and flow out into the treatment tank from the other open end thereof. The positions of the other open ends of the respective pipes may be varied such that the other open ends are distributed along the extending direction of the inflow path. For example, this may be achieved by varying the lengths of the respective pipes.

### Advantageous Effects of Invention

As described above, the present invention can provide a water treatment apparatus that can be installed in a compact space and enables uniform membrane separation treatment.

### Brief Description of Drawings

FIG. 1 is a plan view illustrating a conventional water treatment apparatus.
FIG. 2A illustrates major parts shown in a cross-section taken along line I-I in FIG. 1.
FIG. 2B illustrates a distribution of DO concentration inside a membrane separator shown in FIG. 1A.
FIG. 2C illustrates a distribution of DO concentration inside a treatment tank shown in FIG. 2A.
FIG. 3A is a plan view illustrating a water treatment apparatus according to the present invention.
FIG. 3B is a cross-sectional view taken along line II-II in FIG. 3A.
FIG. 4 illustrates the membrane separator.
FIG. 5 illustrates a membrane element.
FIG. 6A illustrates one embodiment of an inflow path.
FIG. 6B illustrates one embodiment of the inflow path.
FIG. 6C illustrates one embodiment of the inflow path.
FIG. 6D illustrates one embodiment of the inflow path.
FIG. 7 illustrates a return path.
FIG. 8A is a plan view illustrating another embodiment of the water treatment apparatus according to the present invention.
FIG. 8B is a cross-sectional view taken along line III-III in FIG. 8A.
FIG. 9A is a plan view illustrating another embodiment of the water treatment apparatus according to the present invention.
FIG. 9B is a cross-sectional view taken along line IV-IV in FIG. 9A.

### Description of Embodiments

A water treatment apparatus according to the present invention will now be described. The water treatment apparatus receives sewage as raw water and purifies it through a membrane bioreactor process. In addition to sewage, the water treatment apparatus can also be used to purify other types of organic wastewater, such as livestock wastewater, night soil, and wastewater generated from food processing plants.

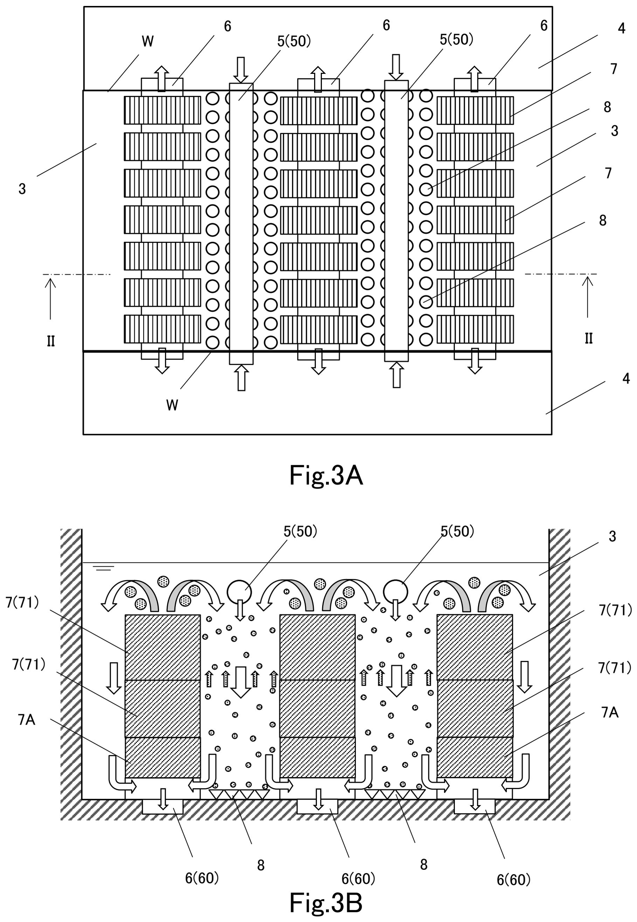

As shown in FIGS. 3A and 3B, the water treatment apparatus 1 includes: a treatment tank 3 for performing nitrification treatment of ammoniacal nitrogen contained in the raw water and membrane separation treatment; anoxic tanks 4, arranged on both sides of the treatment tank 3, for performing denitrification treatment; inflow paths 5 for supplying water to be treated from the anoxic tanks 4 to the treatment tank 3; and return paths 6 for returning the water to be treated from the treatment tank 3 to the anoxic tanks 4.

In the treatment tank 3, multiple membrane separators 7 are immersed in a multiple-row arrangement, and auxiliary air diffusers 8 are installed between the rows of the membrane separators 7 so as to extend along each row. In this example, multiple membrane separators 7 are arranged in three rows between a pair of opposing walls W of rectangular shape in plan view that define the treatment tank 3, with seven membrane separators 7 arranged at equal intervals in each row. The anoxic tanks 4 are disposed on both sides of the treatment tank 3 across the pair of opposing walls W.

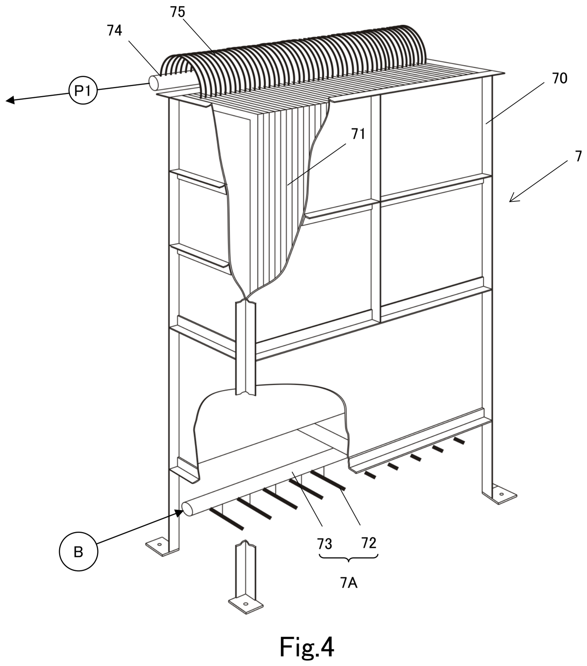

FIG. 4 illustrates an example of the membrane separator 7. The membrane separator 7 includes one hundred plate-like membrane elements 71 inside a membrane case 70 that is open at the top and bottom. The membrane elements 71 are arranged in two vertical tiers with each membrane surface oriented vertically, and are spaced from each other at a constant interval of about 6 to 10 mm (8 mm in the present embodiment). The membrane separator 7 further includes an air diffuser 7A below the membrane case 70.

The air diffuser 7A includes air diffuser pipes 72 formed with multiple diffuser holes, and is connected to an air supply source such as a blower B or a compressor installed outside the tank, via an air diffuser header 73 connected to the air diffuser pipes 72. In the present embodiment, a blower B is used as the air supply source.

The membrane elements 71 are connected to a water collecting pipe 74 via respective tubes 75, and a pump P1 serving as a suction mechanism installed outside the tank is connected via the water collecting pipe 74. This arrangement allows the water to be treated in the treatment tank 3 to be suction-filtered through the membrane surfaces of the respective membrane elements 71.

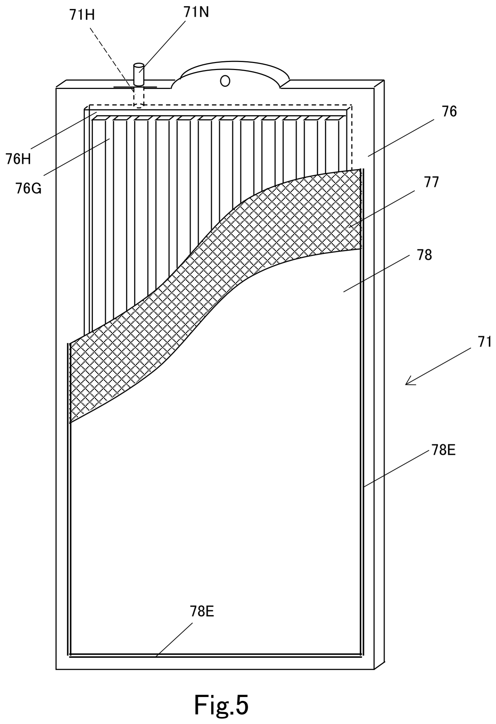

As shown in FIG. 5, each membrane element 71 is configured with a 1000 mm high and 490 mm wide resin membrane support 76 and separation membranes 78 arranged on both front and back sides of the membrane support 76 via spacers 77. Peripheral edges 78E of the separation membranes 78 are joined to the membrane support 76 by ultrasonic welding or heat welding, or by adhesion using an adhesive or the like.

The separation membrane 78 is a microporous organic filtration membrane having an average pore size of about 0.2 µm, in which a porous resin is applied to and impregnated into a nonwoven fabric. It should be noted that the membrane element 71 is not limited to the above configuration, and may alternatively be configured such that a separation membrane 78 is wound around both front and back sides of the membrane support 76, with end portions of the separation membrane 78 being joined thereto by adhesion or welding.

The membrane support 76 includes multiple grooves 76G, each being about 2 mm deep and about 2 mm wide, formed along the longitudinal direction on its surfaces. The membrane support 76 includes, at its upper end, horizontal grooves 76H each providing communication between the grooves 76G. The horizontal grooves 76H formed on both front and back sides communicate with each other via a communication hole 71H, and also communicate with a nozzle 71N formed at an upper edge of the membrane support 76.

Each nozzle 71N is connected to the water collecting pipe 74 via the corresponding tube 75. The pump P1 serving as a suction mechanism is connected to the water collecting pipe 74, allowing permeate water drawn by the pump P1 to be transferred as treated water to a treated water tank.

Operating the air diffuser 7A of the membrane separator 7 configured as above generates an upflow of water to be treated upward from below between the membrane elements 71, thereby preventing fouling substances and foreign matter from accumulating on the membrane surfaces of the separation membranes 78. Operating the suction mechanism allows treated water, obtained by permeating the water to be treated through the separation membranes 78, to be collected.

Returning to FIGS. 3A and 3B, the inflow paths 5 are constituted by two pipes 50, each disposed between the rows of membrane separators 7 and extending along each row, with end portions of each pipe 50 extending to the respective anoxic tanks 4. The pipes 50 are disposed in a horizontal orientation in the vicinity of the water surface of the water to be treated filled in the treatment tank 3, specifically slightly below the water surface. It should be noted that the pipes 50 are only required to be located in the vicinity of the water surface, and may alternatively be disposed slightly above the water surface.

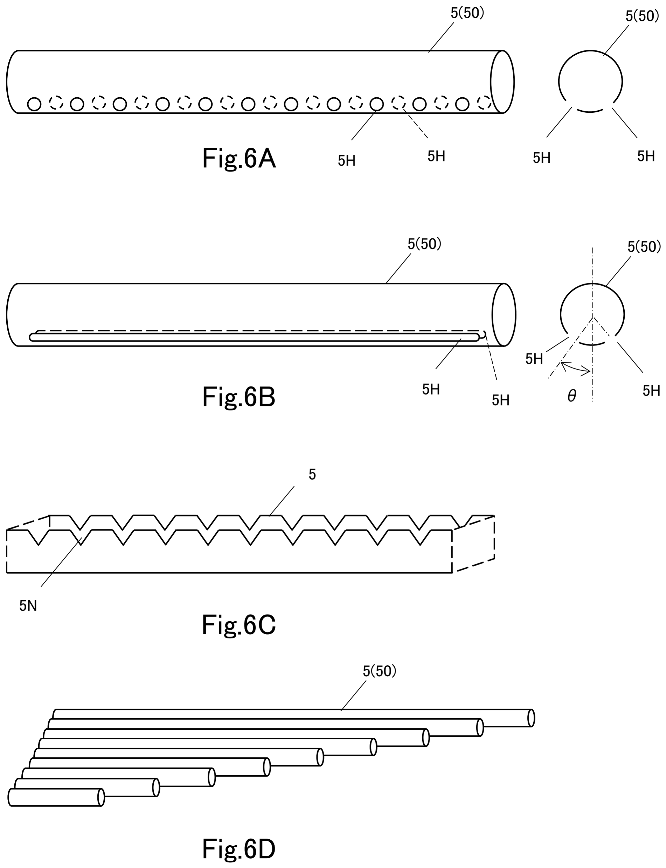

FIG. 6A illustrates a side view of the pipe 50 on the left and a cross-sectional view of the pipe 50 on the right. Each pipe 50 includes multiple openings 5H distributed in the axial direction to allow the water to be treated to be supplied into the treatment tank 3 in a dispersed manner along the extending direction of each pipe 50. Preferably, the diameter and spacing of the openings 5H formed in the axial direction are adjusted such that the water to be treated flowing into the treatment tank 3 from each anoxic tank 4 via the pipes 50 is supplied evenly along the extending direction of each pipe 50. For example, the openings 5H located at the center of the pipe 50, where the inflow pressure of the water to be treated is higher, may each have a smaller diameter than those located at the end portions of the pipe 50, or the openings 5H located at the end portions of the pipe 50 may have a smaller spacing than those located at the center of the pipe 50.

As shown in FIG. 3B, the upflow generated in the water to be treated by air diffusion from the air diffuser 7A provided below each membrane separator 7 rises along gaps between the membrane elements 71 provided inside the membrane case 70, thereby cleaning the membrane surfaces of the separation membranes 78 (see FIG. 5). Thereafter, the upflow flows down between the rows of the membrane separators 7 from above the membrane separators 7. That is, a circulating flow is generated, in which the water to be treated rises inside the membrane separators 7 and flows down between the rows on both sides of the membrane separators 7. The water to be treated introduced from the inflow paths 5 flows down toward the auxiliary air diffusers 8 along the downflow generated between the rows, allowing aerobic treatment to proceed efficiently. The size of the bubbles released from the auxiliary air diffusers 8 is much smaller than that of the bubbles released from the air diffusers 7A provided below the respective membrane separators 7, and the amount of air diffusion from the auxiliary air diffusers 8 is also set to a small value. This ensures sufficient contact opportunities with the downflow of the water to be treated.

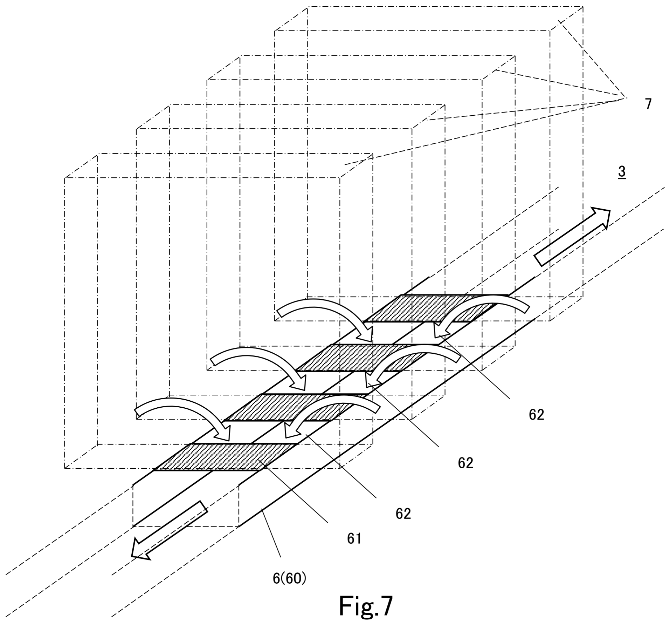

Each return path 6 is located directly below the corresponding row of the membrane separators 7 so as to extend along the row. FIG. 7 illustrates an example of the return path 6. The return path 6 is constituted by a groove 60 formed in the floor of the treatment tank 3. Portions of the groove 60 corresponding to the respective membrane separators 7 arranged in each row are covered with lids 61 to prevent the water to be treated from flowing into the groove 60 and to guide the water to be treated, which forms the circulating flow, upward from below the membrane separators 7. Openings 62 are formed to allow the water to be treated to flow into the groove 60 from portions thereof corresponding to respective gaps between the membrane separators 7.

The water to be treated having flowed into the groove 60 from the openings 62 is returned to each anoxic tank 4 disposed adjacently across the corresponding opposing wall W.

Arranging multiple membrane separators 7 in multiple rows in the treatment tank 3 eliminates the need for forming the treatment tank into a cuboid shape elongated in one direction, making it possible to achieve a compact treatment tank 3. Further, the auxiliary air diffusers 8 are installed between the rows of the membrane separators 7 at the bottom of the treatment tank 3 so as to extend along each row, and the inflow paths 5 are installed between the rows of the membrane separators 7 so as to supply the water to be treated in a dispersed manner along each row. This arrangement ensures uniform aerobic treatment between the rows of the membrane separators 7.

In addition, the water to be treated is subjected to solid-liquid separation by the nearby membrane separator 7 and withdrawn as treated water. That is, aerobic treatment and membrane separation treatment are performed in a dispersed and uniform manner in the treatment tank 3. This can effectively suppress the influence on the membrane separators caused by gradient distributions of the dissolved oxygen concentration and MLSS concentration along the flow direction of the water to be treated, which would otherwise occur if a cuboid treatment tank elongated in one direction is used.

Furthermore, the water to be treated present at the bottom of the treatment tank 3, where the dissolved oxygen (DO) concentration is low, is returned to the anoxic tanks 4, while the water to be treated present in the upper layer of the treatment tank 3, where the dissolved oxygen (DO) concentration is high, comes into efficient contact with the water to be treated introduced from the inflow paths 5.

As described above, in each membrane separator 7, the water to be treated is subjected to solid-liquid separation and withdrawn as treated water, and the membrane surfaces of the separation membranes 78 are cleaned by the upflow of the water to be treated generated by air diffusion from the air diffusers 7A provided below the separation membranes 78. Thereafter, the upflow turns into a downflow and flows down between the rows of the membrane separators 7 from above the membrane separators 7.

That is, a circulating flow is generated, in which the water to be treated rises inside the membrane separators 7 and flows down between the rows on both sides of the membrane separators. In the downflow region, aerobic treatment and oxygen consumption by microbial respiration in the activated sludge proceed. If oxygen becomes insufficient in that region, oxygen is supplied from the auxiliary air diffusers 8, resulting in the dissolved oxygen concentration at the bottom of the treatment tank 3 becoming extremely low. Since the return paths 6 are installed directly below the respective rows of the membrane separators 7 so as to extend along each row, the water to be treated with a low dissolved oxygen concentration is returned as return sludge to the anoxic tanks 4 via the return paths 6. As a result, denitrification treatment, which is an anoxic treatment, proceeds efficiently in the anoxic tanks 4.

If the water to be treated flows out from the portions of the groove corresponding to the respective membrane separators 7, the upflow of the water to be treated would be hindered even with air diffusion from the air diffusers 7A. In that case, cleaning of the membrane surfaces of the separation membranes 78 does not proceed, leading to the increased risk of sludge accumulation on the membrane surfaces. Hence, the portions of the groove corresponding to the respective membrane separators 7 arranged in each row are covered, while the openings are formed in the portions of the groove corresponding to the respective gaps between the membrane separators 7 to receive the water to be treated. This arrangement allows the water to be treated with a low dissolved oxygen concentration to be returned as return sludge to the anoxic tanks 4 without hindering cleaning of the membrane surfaces of the separation membranes 78.

The pump mechanism is provided in either the inflow path 5, through which the water to be treated flows from the anoxic tanks 4 into the treatment tank 3, or the return path 6, through which the water to be treated is returned from the treatment tank 3 to the anoxic tanks 4. This arrangement ensures stable circulation of the water to be treated between the anoxic tanks 4 and the treatment tank 3. In addition, separately providing an excess sludge withdrawal path for withdrawing excess sludge from the treatment tank 3 can keep the MLSS concentration in the treatment tank 3 constant.

Now, another embodiment of the water treatment apparatus 1 will be described.

In the above embodiment, the anoxic tanks 4 are disposed on both sides of the treatment tank 3 across the pair of opposing walls W, and raw water flows into the anoxic tanks 4. However, an embodiment is also possible where an anaerobic tank for removing phosphorus is provided opposite the treatment tank 3 across the corresponding anoxic tank 4, and raw water flows into the anaerobic tank. In this case, a further sludge return path may be provided between the anaerobic tank and the anoxic tank 4. It goes without saying that this configuration in which an anaerobic tank is provided adjacent to the anoxic tank 4 can also be applied to other embodiments of the water treatment apparatus 1 described below.

In the above embodiment, the anoxic tanks 4 are disposed on both sides of the treatment tank 3 across the pair of opposing walls W. However, an embodiment is also possible where a single anoxic tank 4 is disposed on one side of the treatment tank 3 across one of the pair of opposing walls W. In such an embodiment, an anaerobic tank may be provided on the opposite side of the treatment tank 3 across the anoxic tank 4. In this case, the water to be treated flows through the inflow path 5 and the return path 6 in only one direction.

In the above embodiment, multiple membrane separators 7 are arranged in rows between the pair of opposing walls W among the sidewalls defining the treatment tank 3, which has a rectangular shape in plan view, with multiple membrane separators 7 installed at equal intervals in each row, and the anoxic tanks 4 are disposed on both sides of the treatment tank 3 across the pair of opposing walls W. However, the present invention is not limited to such an arrangement.

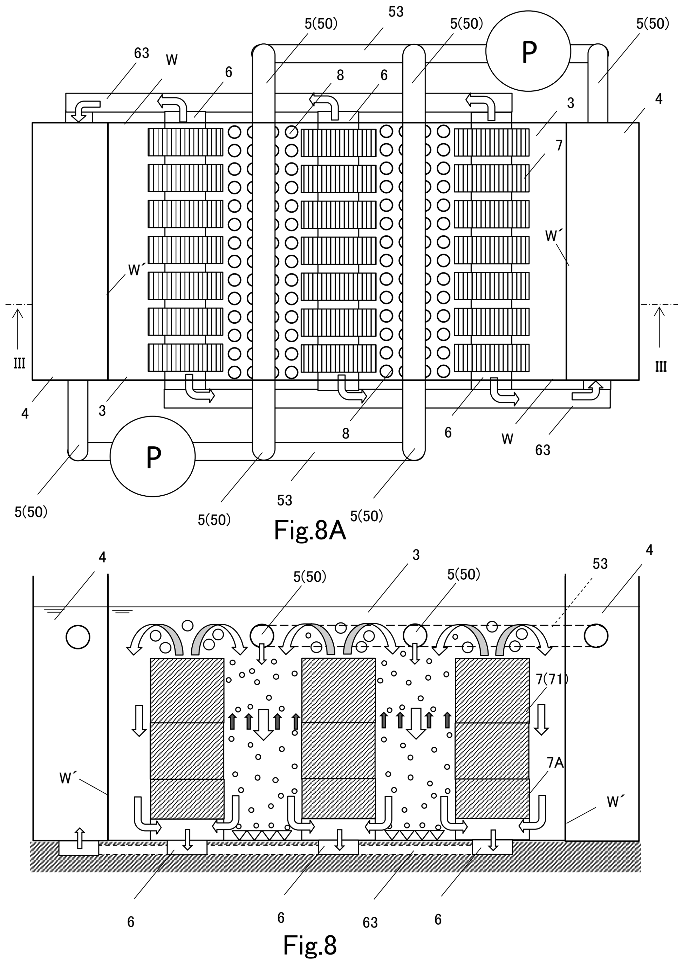

For example, as shown in FIGS. 8A and 8B, an embodiment is also possible where multiple membrane separators 7 are arranged in rows between a pair of opposing walls W (see

FIG. 8A), with multiple membrane separators 7 installed at equal intervals in each row, and anoxic tanks 4 are disposed across another pair of opposing walls W' (see FIG. 8B) different from the pair of opposing walls W.

In this embodiment, the water treatment apparatus 1 can be configured such that the water to be treated flows from the anoxic tanks 4 into the treatment tank 3 via communication pipes 53 that each provide communication between multiple pipes 50 disposed between the pair of opposing walls W, and such that the return sludge is returned from the treatment tank 3 to the anoxic tanks 4 via communication pipes 63 that each provide communication between multiple return paths 6 disposed between the pair of opposing walls W. In this example, a pump P for feeding the water to be treated is installed in each communication pipe 53.

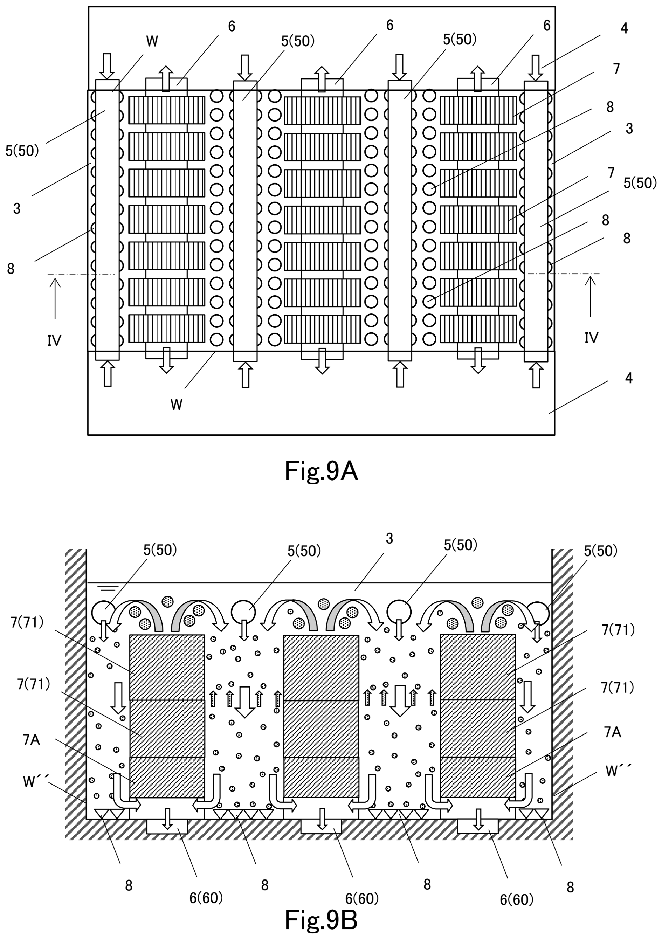

As shown in FIGS. 9A and 9B, in addition to the auxiliary air diffusers 8 and the inflow paths 5 in the water treatment apparatus 1 shown in FIGS. 3A and 3B, the auxiliary air diffusers 8 may also be installed between the membrane separators 7 and each sidewall W" of the treatment tank 3 so as to extend along each row, and the inflow path 5 may also be installed between the membrane separators 7 and each sidewall W" of the treatment tank 3 so as to supply the water to be treated in a dispersed manner along each row. This configuration allows aerobic treatment to be performed uniformly not only between the rows of the membrane separators but also between the membrane separators and each sidewall of the treatment tank, ensuring more uniform aerobic treatment throughout the entire treatment tank.

Furthermore, the configuration shown in FIGS. 9A and 9B may be combined with the water treatment apparatus 1 shown in FIGS. 8A and 8B. That is, the auxiliary air diffusers 8 may also be installed between the membrane separators 7 and each sidewall W' of the treatment tank 3 so as to extend along each row, and the inflow path 5 may also be installed between the membrane separators 7 and each sidewall W' of the treatment tank 3 so as to supply the water to be treated in a dispersed manner along each row.

FIGS. 6B to 6D illustrate various embodiments of the inflow path 5.

FIG. 6B illustrates a side view of the pipe 50 on the left and a cross-sectional view of the pipe 50 on the right. The figure illustrates an embodiment in which slits are formed in the pipe 50, which constitutes the inflow path 5, along the axial direction, and the slits function as the openings 5H. In this example, one slit is formed along the longitudinal direction of the pipe 50 on each of the left and right sides thereof at a position inclined by a predetermined angle θ with respect to a vertical line passing through the center of the pipe 50. The predetermined angle θ is not limited to a particular value, and may be set as appropriate. The predetermined angle θ may be set to 0°, such that a single slit is formed at the lowermost portion of the pipe 50. The same applies to FIG. 6A.

The slit may be divided into multiple sections along the longitudinal direction of the pipe 50. It is preferable that the widths and lengths of the slit sections are adjusted such that the water to be treated flowing into the treatment tank 3 from each anoxic tank 4 via the pipe 50 is supplied evenly along the extending direction of each pipe 50. For example, the slit width at the central portion of the pipe 50, where the inflow pressure of the water to be treated is higher, may be set narrower than that at the end portions of the pipe 50. When a single anoxic tank 4 is disposed across only one of the opposing walls W of the treatment tank 3, the inflow pressure of the water to be treated becomes higher at the pipe end of the pipe 50 opposite to the pipe end thereof located closer to the anoxic tank 4. Thus, the slit sections may be formed such that the slit width gradually becomes narrower toward the opposite pipe end.

FIG. 6C illustrates a trough-shaped inflow path 5. The bottom of the inflow path 5 is disposed at a position slightly lower than the water surface of the anoxic tank 4, and notches 5N are formed in upper edges of the trough to allow the water to be treated flowing into the trough from the anoxic tank 4 to overflow into the treatment tank 3. As in FIGS. 6A and 6B, it is preferable that the depth and spacing of the notches 5N are adjusted such that the water to be treated flowing into the treatment tank 3 from the anoxic tank 4 via the inflow path 5 is supplied evenly along the extending direction of the inflow path 5.

FIGS. 6A to 6C show examples where the inflow path 5 is constituted by a single pipe 50 or a single trough. However, as shown in FIG. 6D, the inflow path 5 may be constituted by multiple pipes 50 arranged such that their open ends are distributed along the extending direction of the inflow path 5. The inflow path 5 may be formed by these multiple pipes 50 each configured to allow the water to be treated to flow in from one open end 50A thereof and flow out into the treatment tank 3 from the other open end 50B thereof, and the positions of the other open ends 50B of the respective pipes 50 may be varied so as to be distributed along the extending direction of the inflow path 5. This arrangement can be suitably used in embodiments where a single anoxic tank 4 is disposed across only one of the pair of opposing walls W of the treatment tank 3.

In the above-described embodiments, the return path 6 is constituted by the groove 60 formed in the floor of the treatment tank 3. However, in an alternative embodiment, the return path 6 may be constituted by a trough installed on the floor surface of the treatment tank 3 so as to extend along each row directly below the membrane separators 7, and lids may be installed at portions of the trough corresponding to the respective membrane separators 7 arranged in each row. Even in cases where it is difficult to form a groove in the bottom of the treatment tank 3, which is constituted by a concrete structure, the return path 6 can be provided by installing such a trough on the floor surface of the treatment tank 3 directly below the membrane separators 7.

The return path 6 may also be constituted by a pipe installed on the floor surface of the treatment tank 3 so as to extend along each row directly below the membrane separators 7, and openings to allow entry of return sludge may be formed in portions of the pipe corresponding to the respective gaps between the membrane separators 7.

It will be appreciated that the above-described embodiments are merely illustrations of certain aspects of the present invention. The above descriptions do not limit the present invention, and specific configurations of the elements may be modified as appropriate, as long as such modifications provide the functions and effects of the present invention as well.

### Reference Signs List

1: Water treatment apparatus
3: Treatment tank
4: Anoxic tank
5: Inflow path
6: Return path
7: Membrane separator
8: Auxiliary air diffuser

## Claims

1. A water treatment apparatus comprising:
a treatment tank having a plurality of membrane separators immersed therein and an auxiliary air diffuser installed therein;
an inflow path configured to supply water to be treated from an anoxic tank to the treatment tank; and
a return path configured to return the water to be treated from the treatment tank to the anoxic tank, wherein
the membrane separators are installed in a plurality of rows in the treatment tank,
the auxiliary air diffuser is installed between the rows of the membrane separators so as to extend along each row of the membrane separators, and
the inflow path is installed between the rows of the membrane separators so as to supply the water to be treated in a dispersed manner along each row of the membrane separators.

2. The water treatment apparatus according to claim 1, wherein
the auxiliary air diffuser is installed between the membrane separators and a sidewall of the treatment tank so as to extend along each row of the membrane separators, and
the inflow path is installed between the membrane separators and a sidewall of the treatment tank so as to supply the water to be treated in a dispersed manner along each row of the membrane separators.

3. The water treatment apparatus according to claim 1, wherein
the auxiliary air diffuser is installed at a bottom of the treatment tank, and
the inflow path is installed between the rows of the membrane separators in a vicinity of a water surface of the treatment tank so as to extend along each row of the membrane separators.

4. The water treatment apparatus according to claim 3, wherein
a circulating flow of the water to be treated is generated, in which an upflow of the water to be treated is generated by air diffusion from an air diffuser provided below the membrane separators and turns into a downflow flowing down between the rows of the membrane separators from above the membrane separators, and
the water to be treated introduced from the inflow path flows down toward the auxiliary air diffuser along the downflow.

5. The water treatment apparatus according to claim 3 or 4, wherein the inflow path is constituted by a pipe formed with openings configured to allow the water to be treated to be supplied in a dispersed manner along an extending direction of the inflow path.

6. The water treatment apparatus according to claim 3 or 4, wherein the inflow path is constituted by a plurality of pipes arranged such that open ends thereof are distributed along an extending direction of the inflow path.
